# EUROPEAN PATENT SPECIFICATION

(11) **EP 4 311 583 B1**
(45) Date of publication and mention of the grant of the patent: **05.08.2026**
(21) Application number: 23173865.9
(22) Date of filing: 17.05.2023
(51) Int. Cl.: A63F 13/35, A63F 13/816, A63F 13/211, A63F 13/212, A63F 13/28, A63F 13/5375, G06F 3/01, A63F 13/65

(54) **VIRTUAL SPACE PROVISION SYSTEM, VIRTUAL SPACE PROVISION METHOD, AND VIRTUAL SPACE PROVISION PROGRAM**
SYSTEM ZUR BEREITSTELLUNG EINES VIRTUELLEN RAUMS, VERFAHREN ZUR BEREITSTELLUNG EINES VIRTUELLEN RAUMS UND PROGRAMM ZUR BEREITSTELLUNG EINES VIRTUELLEN RAUMS
SYSTÈME DE FOURNITURE D'ESPACE VIRTUEL, PROCÉDÉ DE FOURNITURE D'ESPACE VIRTUEL ET PROGRAMME DE FOURNITURE D'ESPACE VIRTUEL

(30) Priority: 29.07.2022 JP 2022121801
(43) Date of publication of application: 31.01.2024
(73) Proprietor: ASICS Corporation, Kobe-shi Hyogo 650-8555 (JP)
(72) Inventor: ICHIKAWA, Masaru, Kobe-shi, 6508555 (JP); NOMURA, Yasuhiro, Kobe-shi, 6508555 (JP)
(74) Representative: TBK

(56) References cited:
- EP-A1- 1 297 865
- WO-A1-2021/060579
- WO-A1-99/00782
- CN-A- 112 755 458
- US-A1- 2003 078 138
- US-A1- 2020 253 320
- US-A1- 2022 207 119

## Description

### 1. Field of the Invention

The present invention relates to a virtual space provision system, a virtual space provision method, and a virtual space provision program.

### 2. Description of Related Art

It has been proposed to use virtual space to perform aerobic exercise in recent years. For example, the technology disclosed in Japanese National-Phase Laid-Open Patent Publication JP 2014-518723 A relates to a treadmill with a device for virtual walking course images. This treadmill is configured to be used within a restricted space, eliminating the risk of traffic accidents and limiting the risk of falls and other hazards.

Further, the treadmill disclosed in JP 2014-518723 A allows a user to select a course from a virtual walking course image menu, and when the user selects a virtual running course image menu set in the virtual running image device at the setting unit, in response to the selection of the user, the image of, for example, a domestic or foreign major marathon race course is output on the monitor. The speed of the image on the monitor changes in accordance with the running speed of the user. In the inclination mode of the inclination and the curve section in the race course, the driving belt operates in conjunction with it while making full use of the corresponding inclined surface. Accordingly, even if the user uses the treadmill in a limited space, the user can enjoy the treadmill as if running on a real course. Moreover, US 2003/078138 A1 discloses a treadmill, wherein a character runs in a virtual space based on movement of the user and shall avoid obstacles occurring on the course. Further, EP 1 297 865 A1 refers to a cycling machine that comprises a monitor for displaying a background image, a roll-playing character and the like, wherein an image processor causes the roll-playing character to make a simulated motion related to the pedal turning movement within the background image on a screen of the monitor in accordance with the detection result of the rotation sensor. Still further, WO 99/00782 A1 shows a system, wherein, during exercise, an exercise monitor measures a performance level of the exerciser, and outputs a performance level signal to a video game player. The video game player monitors the performance level of a video game character based on the performance level of the exerciser.

Also, US 2020/253320 A uses real-time data from force, IMU, pitch and magnetometer sensors embedded in a smart footwear to drive a wearer's avatar (or robot) in VR. Pressure patterns are mapped to direction, speed and turn radius, while multiple vibration motors deliver haptic cues to the footwear that confirm movement, reduce motion-sickness, give instructional nudges, stimulate blood flow, and correct posture.

### SUMMARY OF THE INVENTION

However, the treadmill in JP 2014-518723 A is not realistic enough for users to enjoy and sustain exercise, and may be considered to bore the users.

Therefore, an object of this disclosure is to provide a virtual space provision system, virtual space provision method, and virtual space provision program capable of providing users with sustained exercise without boring them.

According to the invention, this object is achieved by a virtual space provision system, a virtual space provision method, and a virtual space provision program according to accompanying independent claims.

Further features and advantageous modifications are shown in the dependent claims.

The virtual space provision system and others in this disclosure are capable of providing users with sustained exercise without boring them.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG 1 is a diagram illustrating an overview of a virtual space provision system according to an embodiment of the present invention,
FIG 2 is a block diagram illustrating a functional configuration of a server (virtual space provision device), user terminal (communication terminal), smartwatch, and shoes in the virtual space provision system according to the present embodiment,
FIG 3 is a table showing an example of user information stored in the virtual space provision system according to the present embodiment,
FIG 4 is a table showing an example of movement course information stored in the virtual space provision system according to the present embodiment,
FIG 5 is a conceptual diagram illustrating a smart contract used in the virtual space provision system according to the present embodiment,
FIG. 6 is an example of a flowchart of a virtual space provision program executed in the virtual space provision device according to the present embodiment, and
FIG. 7 is an example of a flowchart of a program executed on a head-mounted display in the virtual space provision system according to the present embodiment.

### DETAILED DESCRIPTION OF EMBODIMENTS

With reference to the drawings, an embodiment of the invention (also referred to as the present invention) for the present disclosure will be described. The drawings show an example, and the present invention is not limited to what is shown in the drawings. For example, the number of user terminals, servers, shoes, and smartwatches, for example, data sets (tables), flowcharts, and display screens shown are examples, and the present invention is not limited to them.

### <System Configuration>

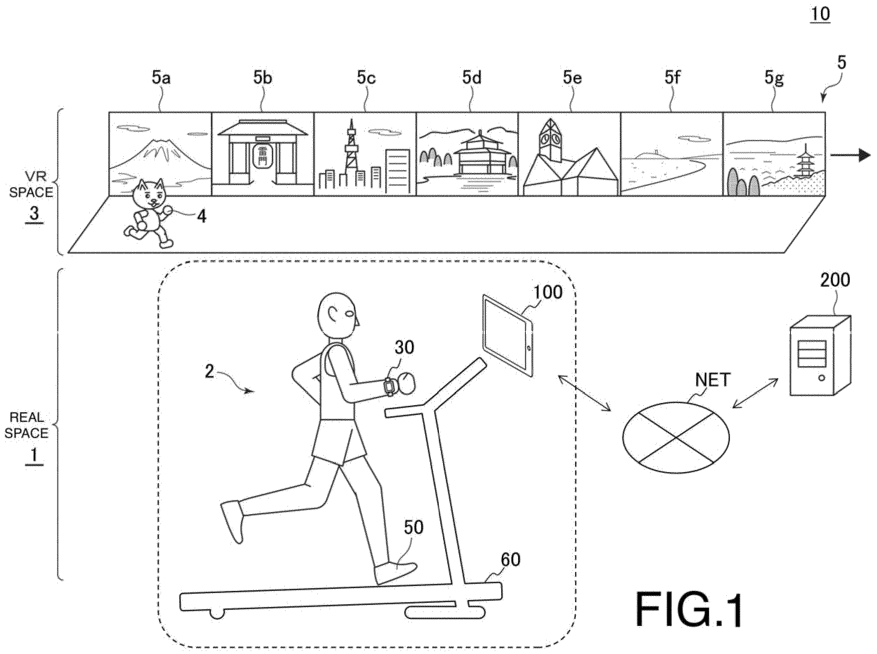

FIG. 1 is a diagram illustrating an overview of a virtual space provision system 10. The virtual space provision system 10 may be directed to an information processing system for a virtual space provision service that provides a virtual space in which a character 4 moves along a course in a virtual (virtual reality: VR) space 3 in conjunction with the movements of a user 2. The virtual space including the character 4 is displayed on a user terminal 100, and the character 4 moves within the virtual space in conjunction with the movements of the user 2 running or walking on a treadmill 60. Although FIG. 1 shows an example of the user 2 running or walking on the treadmill 60, the exercise of the user 2 is not limited to this and can be a bicycle (aerobike: registered trademark). Further, although FIG. 1 shows an example of the user 2 running or walking on the treadmill 60 indoors, the present invention is not limited to this and can also be applied to a case where the user 2 moves outside the room.

The virtual space provision system 10 may include a communication terminal (user terminal) 100, a server (virtual space provision device) 200, a smartwatch 30, and shoes 50. The server 200 is capable of performing various processes related to the virtual space provision system 10. The server 200 is connected to the user terminal 100 via a network NET, which network includes wireless and wired networks. Specifically, for example, network 500 may include a wireless LAN (WLAN), wide area network (WAN), long term evolution (LTE), LTE-Advanced, fourth generation (4G), fifth generation (5G), and sixth generation (6G) or later mobile communication systems. The network 500 is not limited to these examples and may include, for example, a public switched telephone network (PSTN), Bluetooth (registered trademark), optical line, asymmetric digital subscriber line (ADSL), and satellite communication network. The network 500 may also be a combination of these.

In FIG. 1, only one server 200 is shown, but it is not limited to this. That is, the functions described as provided by the server 200 may be embodied by multiple servers. The server 200 may be, for example, a distributed server system that operates cooperatively by communicating over a network, or a cloud server. That is, the server 200 is not limited to physical servers, but may also include software virtual servers.

The user terminal 100 is directed to a communication terminal operated by a user, and may be a portable information communication terminal such as a general-purpose smartphone, tablet terminal, notebook personal computer (hereinafter, referred to as "PC" ), and laptop PC, in which a program for using the virtual space provision system 10 is installed. In FIG. 1, the user terminal 100 is shown as a tablet terminal, but the user terminal 100 is not limited to this and may be a specialized product dedicated to functions for using the virtual space provision system 10. The dedicated product may include, for example, a head-mounted display (HMD) to allow the user to view the virtual space.

### <Server>

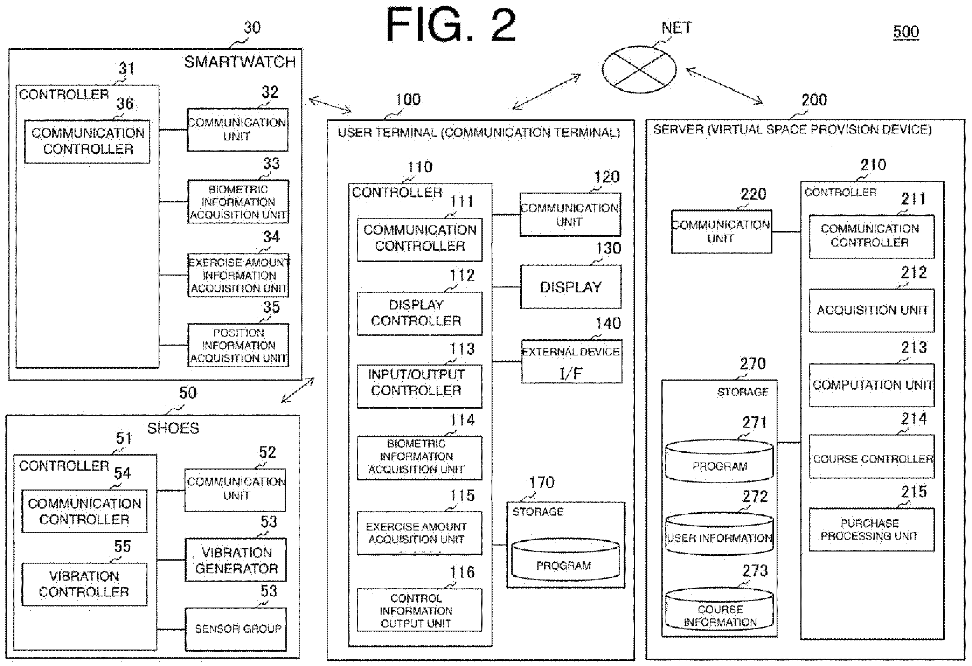

Next, with reference to FIG. 2, a hardware and functional configuration of the server 200 will be described.

### (1) Hardware Configuration of Server

The server 200 includes a controller 210, communication unit 220, and storage 270. The controller 210 may typically be a central processing unit (CPU). The controller 210 may perform the functions and methods shown in the embodiments by reading the programs stored in the storage 270 and executing the codes or instructions contained in the read programs.

The communication unit 220 may be implemented as hardware such as a network adapter, communication software, and combinations thereof. The communication unit 220 may transmit and receive various data to and from the user terminal 100 via the network NET using any communication protocol.

The storage 270 may store various programs 271 and various data (user information 272, course information 273) needed for the server 200 to operate. The storage 270 may include, for example, a flash memory or a memory (e.g., a random access memory (RAM), and a read only memory (ROM)) that provides a work area for the controller 210.

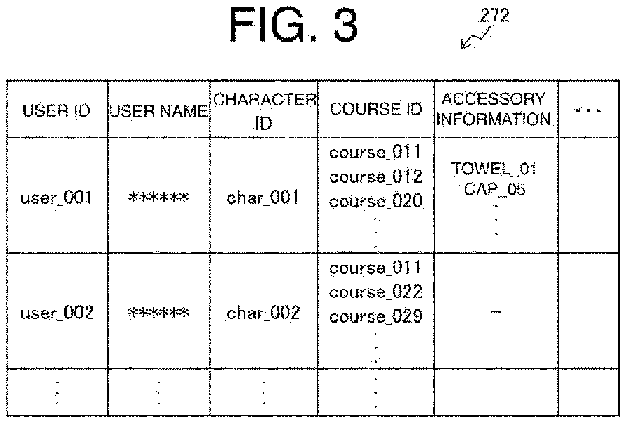

The information stored in the storage 270 will be described below. FIG. 3 is a table showing an example of user information on a user that uses the virtual space provision system 10. In the user information 272, a user name, a character ID to identify a character of a user in the virtual space 3, a course ID to identify a course in the virtual space 3 that the user can use (in which the character 4 can move), and accessory information associated with the accessories stored in association with the character 4 of the user 2 are associated with a user ID (IDentifier) (an example of an identifier) to uniquely identify the user, and stored. For example, referring to the user information 272, a user with user ID "user_001" is associated with the user name "******" and character ID "char_001," and can move through courses in the virtual space identified by course IDs "course_011," "course_012," "course_020"... The accessory information will be described below. The information stored as user information 272 is not limited to those shown in FIG. 3 and may be more or less.

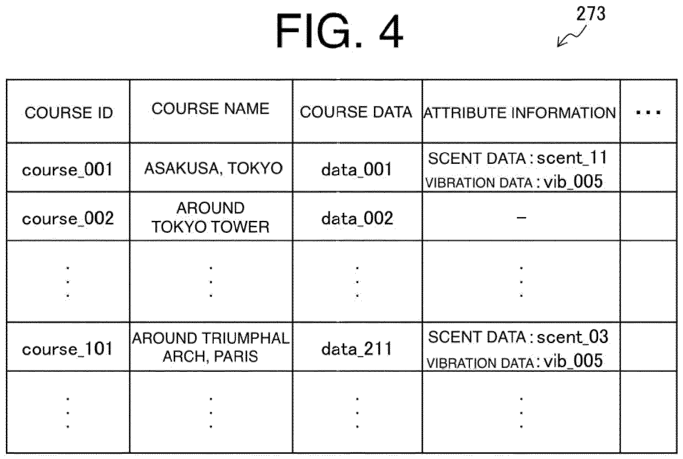

FIG. 4 is a table showing an example of course information that includes information on the scenery of a course in which the user can move through in the virtual space 3 and that the character can move through. In the course information 273, a course name, course data to display the course in the virtual space 3, and the quality of the movement of the character are associated with a course ID to uniquely identify the course, and stored. For example, referring to the course information 273, the course with course ID "course_001" is associated with the course name "53 Stages of the Tokaido (Early Meiji Period)" and course data "data_001." In addition, scent data and vibration data as attribute information are associated with the course. The attribute information will be described below. The information stored as course information 273 is not limited to those shown in FIG. 4 and may be more or less.

The course information may include image information (scene information) of the scenery/landscape of the virtual space 3. For example, the course with the course name "Round Japan (Modern)" identified by the course ID "course_002" in the course information 273 may include as scene information the first scene 5a, second scene 5b, third scene 5c, fourth scene 5d, fifth scene 5e, sixth scene 5f, and seventh scene 5g shown in FIG. 1. The number of scenes is not limited and can be any number of images. In FIG. 1, scenes in different locations are connected like a painting. In contrast, in the virtual space 3, the scenes are displayed in three dimensions, and the character 4 can run within the scenes. That is, Mt. Fuji may be viewed in the scene 5a through the city, and mountain forest, for example, in which the character 4 is running, or the cityscape of Kyoto may be viewed down in the scene 5g from the top of the mountain where he/she climbed after running through the mountain path. The image information of the scenery/landscape of the virtual space 3 can be selected from a variety of situations, and can be a sightseeing spot, a stadium, and a marathon course, for example. It may also employ video clips, still images, paintings, photographs, illustrations, and various other materials. In the image information, the video speed and video acceleration change in accordance with the distance run and the amount of exercise by the user 2, and the video images of the first scene 5a to the seventh scene 5g, ... may shift and change. The details of switching of the scenes will be described below.

Further, the course information may include information on the quality of the movement of the character in association with the image information of the scenery/landscape of the virtual space 3 described above. The "quality of the movement of the character" may correspond to information that indicates how easy or difficult it is for the character 4 to run in the virtual space 3, and may be directed to, for example, a numerical value indicating the condition of the course surface. For example, the condition of a reference road surface with no unevenness or slope may be set to "1.0" and a numerical value indicating the quality of the movement of the character may be set in accordance with whether it is easier or harder to run in comparison to the reference road surface. For example, if the image information of the scenery/landscape corresponds to the sea, the condition of the road surface may be a sandy beach, and the "quality of the movement of the character" may be "0.8." Further, if the image information of the scenery/landscape corresponds to a mountain trail, the condition of the road surface may be uphill on a mountain path, and the "quality of the movement of the character" may be "0.6." Moreover, if the image information of the scenery/landscape corresponds to a downhill of the mountain path, the condition of the road surface may be directed to a downhill on the mountain path, and the "quality of the movement of the character" may be "1.2." Furthermore, if the image information of the scenery/landscape corresponds to a lunar surface, the condition of the road surface may be directed to a lunar surface and the "quality of the movement of the character" may be "1.5." The details of the quality of the movement of the character will be described below.

### (2) Functional Configuration of Server

The server 200 may include a communication controller 211, acquisition unit 212, computation unit 213, course controller 214, and purchase processing unit 215 as functions embodied by a controller 210. The functional units listed in FIG. 2 that are not needed in the embodiments described hereafter may be omitted. The functions or processings of each functional unit may be embodied by machine learning or AI to the extent feasible. The user terminal 100 may also perform some of the various processes described below as being performed by the server 200.

The communication controller 211 may control communication between the server 200 and the user terminal 100 via the communication unit 220.

The acquisition unit 212 may acquire biometric information and exercise amount information transmitted from the user terminal 100 as described below. The biometric information corresponds to the biometric information of the user 2 that is acquired by the biometric information acquisition unit 33 of the smartwatch 30 described below, and may include electrocardiogram waveform, pulse rate, and blood oxygen concentration, for example. The exercise amount information corresponds to the exercise amount information of the user 2 that is acquired from the exercise amount information acquisition unit 34 of the smartwatch 30 or the sensor units 53 of the shoes 50, and may include calories consumed by the user 2 through exercise, distance moved, moving velocity, and acceleration of movement, for example.

The computation unit 213 computes movement quality information from the quality of the movement of the user 2 on the basis of the biometric information and the exercise amount information, and the quality of the movement of the character 4 on the basis of the course in the virtual space 3 in which the character 4 moves. The quality of the exercise of the user 2 may correspond to an indicator of how close the exercise of the user 2 is to ideal exercise. For example, an evaluation table (or learned model, not shown in FIG. 2) may be stored in the storage 270, which stores the appropriate values for any of heart rate, posture, or pace on the basis of the gender, age, beginner, intermediate, advanced, or length of experience. Before starting the exercise, the user can enter basic information such as gender, age, beginner, intermediate, advanced, and length of experience at the user terminal 100, and the data are transmitted from the user terminal 100 to the server 200. The computation unit 213 of the server 200 may compute the appropriate values of heart rate, posture, or pace for the user with reference to an evaluation table or a learned model from the basic information of the user. The computation unit 214 may compute the evaluation value as the quality of the exercise of the user from 0.1 to 1.0 by an increment of 0.1, depending on what percentage the heart rate, for example, transmitted from the user terminal 100 deviates from the appropriate value during the exercise of the user. For example, if the heart rate of the user 2 deviates from the heart rate recommended from the exercise duration (ideal heart rate) by greater than or equal to a predetermined threshold, it may be determined to be an unfavorable quality of the exercise. Alternatively, if the calories consumed since the user 2 has started the exercise deviates from the calories consumed recommended from the exercise duration (ideal calories consumed) by greater than or equal to a predetermined threshold, it may also be determined to be an unfavorable quality of the exercise. The indicators as quality of exercise are not limited to these.

The computation unit 213 may compute movement quality information from the quality of the exercise of the user and the quality of the movement of the character. For example, the case where a user selects the course "53 Stages of the Tokaido (early Meiji era)" in the virtual space and runs 5 km on a treadmill 60 during exercise is considered. It is supposed that the heart rate of the user during the 5 km run is 60 bpm and the evaluation value as the quality of the exercise is 0.9. It is also supposed that in the virtual space, the character 4 is running through a scene with 2 to 3 cm of snow on a slope in Hakone (Kowakudani), and that the evaluation value as the quality of movement of the character 4 is 0.6. In this case, the computation unit 213 may compute the movement quality information as (amount of exercise of the user) x (quality of exercise of the user) x (quality of movement of the character) = 5 km x 0.9 x 0.6 = 2.7 km.

The course controller 214 may control the situation of the course in which the character moves through by changing the viewpoint in the virtual space on the basis of the movement quality information. For example, the course controller 214 determines the movement distance of the character 4 in the virtual space 3 in accordance with the distance moved by the user 2 or the calories consumed by the user 2 through the exercise, and changes the scenery/landscape of the movement course information in accordance with the movement distance. For example, if the movement quality information is directed to 2.7 km as described above, the course controller 214 may switch the scene to be displayed in the virtual space 3 from the point at the slope in Hakone (Kowakudani) to the scene at Gora 2.7 km away therefrom. Therefore, according to one embodiment of the present invention, the greater the distance moved by the user 2 or the more the calories consumed through the exercise is/are, the greater the distance moved by the character 4 in the virtual space 3 becomes, and as for the scenery/landscape of the movement course information, the scenery/landscape of a remote location corresponding to the movement distance is displayed to the user 2. At this time, according to one embodiment of the present invention, the movement distance is computed by taking into account the ease or difficulty of running of the character in accordance with the scene in the virtual space 3, thus giving the user a sense of immersion in the virtual space 3.

Further, the course controller 214 determines the moving velocity of the character 4 in the virtual space 3 in accordance with the moving velocity of the user 2, and sets the image speed of the scenery/landscape of the moving course information in accordance with the moving velocity. Accordingly, the greater the moving velocity of the user 2 is, the greater the moving velocity of the character 4 in the virtual space 3 becomes, and the greater the image speed of the scenery/landscape of the moving course information becomes as well. At this time, according to one embodiment of the present invention, the moving velocity of the character 4 is computed by taking into account the ease or difficulty of running of the character in accordance with the scene in the virtual space 3, thus giving the user a sense of immersion in the virtual space 3.

Further, the course controller 214 determines the movement acceleration of the character 4 in the virtual space 3 in accordance with the movement acceleration of the user 2, determines the rate of change of the image speed of the scenery/landscape of the movement course in accordance with the movement acceleration, and determines the rate of change of the image speed of the scenery/landscape of the movement course information in accordance with the rate of change of the speed. Accordingly, the greater the movement acceleration of the user 2 is, the greater the movement acceleration of the character 4 in the virtual space 3 becomes, and the greater the rate of change of the image speed of the scenery/landscape of the moving course becomes as well. At this time, according to one embodiment of the present invention, the movement acceleration is computed by taking into account the ease or difficulty of running of the character in accordance with the scene in the virtual space 3, thus giving the user a sense of immersion in the virtual space 3.

The purchase processing unit 215 processes the purchase of provable accessory information by the user on the basis of non-substitutable tokens attached to the character 4.

The non-substitutable tokens here may correspond to electronic money, cryptocurrency assets, and points and coupons for buying and selling issued by various businesses, for example. The non-substitutable tokens may be used to prove the ownership of the accessory information for the owner. The accessory information may refer to items such as shoes, sunglasses, uniforms, and caps, for example, that the character 4 wears in the virtual space 3, and at least the exercise amount information may be associated with the accessory information and stored in the storage 270. The course controller 214 causes the character 4 to be output in the virtual space 3 with the associated accessories attached to the character 4 superimposed on the course in which the character 4 moves.

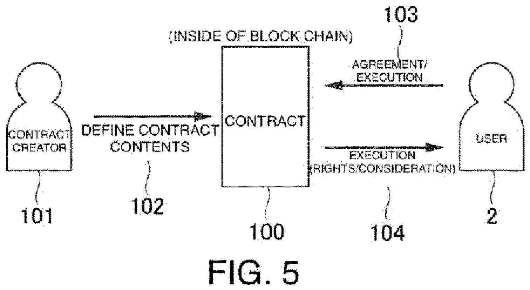

The purchase processing unit 215 may allow updating of the smart contract concluded by the user 2 and may instruct the storage 11 to store the updated smart contract, and the course controller 214 may output the smart contract stored in the storage 11 to the virtual space 3. As shown in FIG. 5, the smart contract may be set in which the contract creator 101 defines the contents of the contract in advance inside the blockchain 100 (step S102), and when the user 2 agrees with and executes it (step S103), the defined contract is automatically executed and rights and consideration are granted to the user 2 (step S104). For example, if the user 2 purchases shoes used by the character 4 as an accessory at a predetermined price, the user 2 may be granted the right to use the accessory within the virtual space 3.

### <User Terminal>

Next, with reference to FIG. 2, a hardware and functional configuration of the user terminal 100 according to the present embodiment will be described.

### (1) Hardware Configuration of User Terminal

The user terminal 100 may include a controller 110, a communication unit 120, a display 130, an external device interface (I/F) 140, and a storage 170.

The controller 110 is typically a processor, which may be embodied by a central processing unit (CPU) or dedicated circuit. The controller 110 may perform the functions and methods shown in the embodiments by reading the programs stored in the storage 170 and executing the codes or instructions contained in the read programs.

The storage 170 may include, for example, flash memory, and memory (e.g., RAM, and ROM) that provides a work area for the controller 110, and store various programs and various data needed for the operation of the user terminal 100. That is, the storage 170 may store programs associated with the applications for the virtual space provision service.

The communication unit 120 may be implemented as hardware such as a network adapter, communication software, and combinations thereof. The communication unit 120 may transmit and receive various data to and from the server 200 via the network NET using any communication protocol.

The display 130 may correspond to a monitor that displays data in accordance with the display data written to the frame buffer, which may be, for example, a touch panel or touch display.

The external device I/F 140 corresponds to a connection interface to external devices and connects the user terminal 100 to the smartwatch 30 and shoes 50 described below. The connection to the external devices may be wireless or wired. The external device I/F 140 may also connect the head-mounted display (not shown) to the user terminal 100. In addition, the external devices may include speakers and microphones.

### (2) Functional Configuration of User Terminal

The user terminal 100 may include a communication controller 111, display controller 112, input/output controller 113, biometric information acquisition unit 114, exercise amount acquisition unit 115, and control request output unit 116 as functions embodied by the controller 110. The functional units that are not needed in the embodiments described hereafter may be omitted. The functions or processings of each functional unit may be embodied by machine learning or AI to the extent feasible. The server 200 may also perform some of the various processes performed by the user terminal 100 described below.

The communication controller 111 may control communication by the communication unit 120 between the user terminal 100 and the server 200 via the network NET, allowing transmission and reception of various types of information.

The display controller 112 may control the display of data on the display 130. For example, the display controller 112 may display the virtual space 3 including the character 4 on the basis of the data transmitted from the server 200. For example, the display controller 111 may change the light source settings in the virtual space 3 on the basis of the movement quality information described above. For example, the light source setting may correspond to a setting for the brightness, scene, and atmosphere effects in the virtual space 3. For example, the setting may be related to the production of the winter dawn, summer dusk, spring afternoon, and autumn night sky in the virtual space 3. The display controller 112 may also display a direction indication on the display 130 that indicates the direction of movement to the user on the basis of the course in which the character 4 has moved in the virtual space 3 in response to data transmitted from the server 200.

The input/output controller 113 may control the communication of various types of information to and from the external devices. For example, the input/output controller 113 may generate sound effects through the speakers in accordance with the contents of the virtual space 3 in which the character 4 moves.

The biometric information acquisition unit 114 may acquire biometric information of the user as described above, which is measured by the smartwatch 30, shoes 50, and treadmill 60. The exercise amount acquisition unit 115 may also acquire the amount of exercise of the user as described above, as measured by the smartwatch 30, shoes 50, and treadmill 60.

The control information output unit 116 may output control information to generate a predetermined scent from the scent generator provided in the head-mounted display (not shown in FIG. 2) in accordance with the contents of the virtual space 3 (scenery projected on the course) in which the character 4 moves. The scent generator may be directed to, for example, an aroma diffuser, which may be air-blast, heating, jetting, ultrasonic, or any other type. The control information output unit 116 may output control information to generate predetermined vibrations or impacts to the shoes 50 or the head-mounted display in accordance with the contents of the virtual space 3 (such as the condition of the course surface) in which the character 4 moves.

### <Smartwatch>

Next, the hardware and functional configuration of the smartwatch will be described. Smartwatch 30may correspond to a wristwatch wearable device worn on the arm of the user 2, and may be an external device that acquires biometric, exercise amount, and location information of the user.

The smartwatch 30 includes a location information acquisition unit (global positioning system (GPS)) 35, an exercise amount information acquisition unit (e.g., acceleration sensor, angular velocity sensor) 34, and a biometric information acquisition unit (e.g., an ECG sensor, pulse rate sensor, and blood oxygen sensor) 33. The data acquired by the acquisition unit above may be transmitted by the communication controller 36 to the user terminal 100 via a communication unit 32.

### <Shoes>

Shoes 50 have a communication function with a group of sensors 53 that measure the amount of exercise (e.g., movement distance, and pitch) and biometric information (e.g., center of gravity (posture)). The data measured by the group of sensors 53 may be transmitted by a communication controller 54 to the user terminal 100 via a communication unit 52. The shoes 50 can include a pulse voltage generator as the vibration generator 53, which generates vibrations in the shoes 50 under the control of the vibration controller 55 in accordance with the contents of the virtual space 3 in which the character 4 runs, thereby vibrating the feet of the user 2. The mechanism for generating vibration is not limited to this. The shoes 50 may include a device that stimulates tactile, pressure, and temperature sensations in the feet of the user 2 in place of or along with the vibration generator 53, and a controller that controls the device.

### <Head-Mounted Display>

In the above, the case where the output destination of the virtual space 3 is the user terminal 100 has been described. However, the virtual space 3 may be output through a head-mounted display worn by the user. The head-mounted display may be, for example, a goggle-type or glasses-type (smart glasses), and the virtual space provided to the user by the head-mounted display may be VR, augmented reality (AR), or mixed reality (MR).

The head-mounted display may include a scent generator described above. The course controller 214 may select a predetermined scent from a plurality of scents on the basis of the movement quality information and generate it from the scent generator. For example, scent data may be associated with each course in the movement course information 273 in FIG. 4, and if the movement quality information computed by the computation unit 213 is greater than or equal to a predetermined value, the scent data associated with the scene in the virtual space 3 where the character 4 moves may be selected.

### <Virtual Space Provision Method>

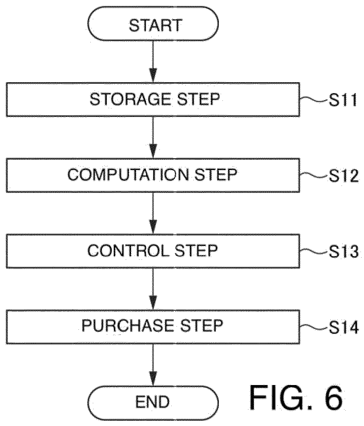

Next, with reference to FIG. 6, the virtual space provision method according to the present embodiment will be described along with the virtual space provision program. FIG. 6 is a flowchart of the virtual space provision program according to the present embodiment.

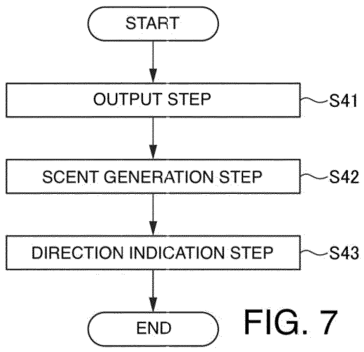

As shown in FIG. 6, the virtual space provision method includes storage step S11, computation step S12, control step S13, and purchase step S14. The process to coordinate with the process disclosed in the flowchart in FIG. 7 below is also appropriately included.

The server 200 reads the virtual space movement program stored in the ROM or storage 11 (not shown) into the main RAM and executes the virtual space movement program by the CPU (not shown). The virtual space movement program causes the CPU of the virtual space movement device 10 to embody the functions of storage, computation, control, and purchase.

Although the case in which these functions are processed in the order shown in the flowchart in FIG. 6 is illustrated as an example, this case is not limited thereto, and the virtual space movement program may be executed in which the order of these functions is changed as appropriate.

Since the description of the above functions is redundant with that of the storage 270, computation unit 213, course controller 214, and purchase processing unit 215 of the server 200, the detailed description is omitted.

The storage function stores movement course information including information on the scenery of the course in which the character can move in the virtual space (step S11: storage step).

The computation function computes movement quality information from the quality of the movement of the user on the basis of the biometric information and the exercise amount information and the quality of the movement of the character on the basis of the course in the virtual space in which the character moves (step S12: computation step).

The control function controls the situation of the course through which the character moves by changing the viewpoint in the virtual space on the basis of the movement quality information (step S13: control step).

The purchase function enables the purchase of provable accessory information by non-substitutable tokens attached to the character (step S14: purchase step).

Next, with reference to FIG. 7, a program executed on the head-mounted display in the virtual space provision system according to the present embodiment will be described. Since the head-mounted display is separate from the server 200, the process is shown separately.

As shown in FIG. 7, the program for the head-mounted display includes an output step S41, a scent generation step S42, and a direction indication step S43.

The head-mounted display reads the program for smart glasses stored in the ROM or storage (not shown in FIG. 7) into the main unit, executes the program for smart glasses by the CPU (not shown in FIG. 7), and causes the CPU of the head-mounted display to embody the output function, scent generation function, and direction indication function.

The case in which these functions are processed in the order shown in the flowchart in FIG. 7 is shown as an example, but this case is not limited thereto, and the program for smart glasses may be executed in which the order of these functions is changed as appropriate.

The output function outputs the courses and characters to the display of the head-mounted display (step S41: output step). The scent generation function generates multiple types of scents from the scent generator in the head-mounted display (step S42: scent generation step). The direction indication function indicates the direction of movement to the user via the output function on the basis of the course in which the character is moving (step S43: direction indication step).

### (For Other Embodiments)

A virtual space movement device according to another embodiment will be described below. The server 200 may connect courses in the virtual space in which multiple users can each move through, and the users may be able to switch the courses. Further, the course controller 214 may store as historical information that the character of the user and the accessories associated with that character have been output in other virtual spaces where other users that are different from the user can move.

In one embodiment of the present invention, the course controller 214 may move a camera and light source in the virtual space on the basis of the exercise or biometric information, and may also control sound changes to this movement. That is, the camera angle, light source (illumination), and sound effects may be changed in accordance with the user actions.

In one embodiment of the present invention, conditions in the virtual space may change depending on the products (e.g., shoes, and caps) purchased by the user in real life. For example, when a user registers the purchase of shoes with the virtual space provision system, the user may be able to go through a different virtual space depending on the type of the shoes purchased. The different virtual space may refer to a new course, a new season, or a new time of day. Further, the combination of shoes and cap may allow users to run the course of their choice in the season of their choice. That is, the user can select shoes or caps and go through a new virtual space 3 as if he/she were acquiring an item by paying a fee.

In one embodiment of the present invention, when the user moves outside the room, the route in the real world may be guided in accordance with the road conditions in the virtual space. For example, when the user crosses a mountain in Hakone in the virtual space, a tough route may be guided (introduced) in the real world, and a new course may fail to be acquired in the virtual space if the user fails to pass the tough route in the real world. The guide in the real world may be provided by displaying a route on the smartwatch 30, for example, or by vibrating the feet of the user using a haptics device installed in the shoes 50.

In one embodiment of the present invention, the treadmill 60 may be controlled in accordance with the road conditions in the virtual space. For example, if the user is walking up a hill in the virtual space, the speed and angle of the treadmill 60 may be increased to provide a load equivalent to that of the hill. Rhythmic sounds and weak electric currents may be generated from the treadmill 60, smartwatch 30, and shoes 50 to change the speed of the sound/stimulus tempo. An exercise menu (e.g., 5 km run, foot stomp, and high knees) is set for the user, and the number of foot stomps and high knees (that can be cleared) is varied in accordance with the road conditions in the virtual space, or in contrast, an exercise menu that can provide a load commensurate with the calories consumed in the road conditions in the virtual space may be imposed on the user in the real world.

In one embodiment of the present invention, in light of the fact that the working from home is now mainstream, for example, the space where the user is present may be sensed by a sensor installed at home, and the results of the sensing may be transmitted to the server 200 to change the virtual space. For example, exercise such as jogging in the home, doing high knees, or walking up and down the stairs in the house may be converted into movements and actions in gaming, for example, in the virtual space.

In one embodiment of the present invention, the server 200 may display a character that imitates a pet (dog, cat) in the virtual space, and the user may walk around in the virtual space with the pet. The pet may also grow in the virtual space in response to the exercise of the user.

In another embodiment, a virtual space is created utilizing the habit of humans to walk. For example, a virtual space for a golf course, a game of tag, a walk with children, or rescuing a person in distress is created.

In another embodiment, a virtual space is created using images captured by the user. As the walking creates a virtual space, and as the number of users increases, the virtual space is updated.

In another embodiment, a virtual space is created by joining photos of the route walked by the user. As the photos, those captured by a third-party (e.g., photos from Google (registered trademark) Maps) or those captured by the user may be used. The course actually walked by the user is stored by GPS and displayed on Google Maps (registered trademark). Although the landscape is on the basis of the default setting, changes to the landscape can be controlled by walking. As the number of participants increases, the landscape will change.

In another embodiment, a virtual space is created independently of intentions of users rather than simply created. When there are few users in the virtual space, it may be an undeveloped area, but as the number of users increases, the virtual space is created by the photos brought by and selected by the users. The scenery/landscape changes in accordance with the actions/behavior of the users.

In another embodiment, a virtual space is constructed independent of the intentions of the users, but the users actively cooperate with others to construct a virtual space of their own intentions. Basically, the virtual space is constructed with the own worldview of the user (photos captured or selected by oneself), but by collaborating with others, the own worldview of the user is joined and mixed with the worldviews of the others (photos captured or selected by oneself) to construct the virtual space. The collaboration creates a virtual space. The collaboration creates a walking worldview (virtual space). The users can create their own virtual space for walking by bringing photos, videos, and music.

In another embodiment, the user(s) walk in a virtual space created by himself/herself or by them (collaboration). The users walk while creating the virtual space. They capture photos every day and create a virtual space with these photos. They walk in a virtual world on the basis of a diary. Walking in this virtual space allows them to walk while reminiscing about their past and the worlds of others, partners, parents, and children.

In another embodiment, walking in the real world creates a course for walking in the virtual world. Walking with the video captured in the real world creates a walking course in the virtual space on the basis of this video.

In another embodiment, the purchased shoes are associated with the quality of the walking. Sensors that work with the app is built into the shoes. On a mountain climbing course (virtual space), pressure sensors are built into the soles of the shoes to measure the load on the soles of the feet during the climbing. Sensors that measure the pulling force are built into the shoelaces to measure the force of stepping into the shoes during the climbing. The sensors also measure the load on ankles, and knees, for example.

In another embodiment, the situation of the virtual space is changed in accordance with the types of shoes. If the users purchase a pair of business shoes, they will be walking in the virtual world of Marunouchi or Kasumigaseki. If they purchase golf shoes, they will walk the golf course. Further, if they purchase a pair of running shoes for the gym, they will walk around the gym facility.

In another embodiment, an online store sells shoes associated with the data in the virtual space. The purchasers purchase shoes for the purpose of walking in a new virtual space.

A virtual space provision system (10) that provides a virtual space (3) in which a character (4) moves along a course in the virtual space (3) in conjunction with movement of a user (2) includes: a storage (270) that stores movement course information (273) including information on scenery of the course in which the character (4) is capable of moving; an acquisition unit (212) that acquires biometric information indicating a biological state of the user (2) that exercises, and acquires exercise amount information indicating an amount of exercise by the user (2); a computation unit (213) that computes movement quality information from quality of the exercise of the user (2) on the basis of the biometric and exercise amount information and quality of movement of the character (4) on the basis of the course in the virtual space (3) in which the character (4) moves; and a course controller (214) that controls a situation of the course in which the character (4) moves through by changing a viewpoint in the virtual space (3) on the basis of the movement quality information.

## Claims

1. A virtual space provision system (10) that provides a virtual space (3) in which a character (4) moves along a course in the virtual space (3) in conjunction with movement of a user (2), the system (10) comprising:
a storage (270) that stores movement course information (273) including information on scenery of the course in which the character (4) is capable of moving; and
an acquisition unit (212) that acquires biometric information indicating a biological state of the user (2) that exercises, and acquires exercise amount information indicating an amount of exercise by the user (2),
**characterized by**
a computation unit (213) that computes
quality of the exercise of the user (2) indicating an evaluation value of an exercise state of the user on the basis of the biometric and exercise amount information,
quality of movement of the character (4) indicating a numerical value reflecting how difficult or easy it is for the character (4) to move in the virtual space (3) based on a condition of the course surface in the virtual space (3) in which the character (4) moves, and
movement quality information from the evaluation value and the numerical value;
a course controller (214) that is configured to control
a situation of the course in which the character (4) moves through by changing a viewpoint in the virtual space (3) on the basis of the movement quality information,
a status of the course on the basis of information of the exercise state of the user (2) and the movement state of the character (4), and
change the viewpoint in the virtual space (3) and a light source setting in a predetermined output device that outputs the course and the character (4) on the basis of the movement quality information; and
shoes (50) that are worn by the user (2) and provide predetermined stimulation to feet of the user (2), wherein the shoes (50) include
a device that stimulates tactile, pressure, and temperature sensations in the feet of the user (2), and
a controller that controls the device, wherein the controller is configured to control a type, size, and time point of stimulation applied to the feet of the user (2) on the basis of the movement quality information and the movement course information (273).

2. The virtual space provision system (10) according to claim 1, wherein
the purchase unit (215) allows for an update of a smart contract that the user (2) concludes, and allows the storage (270) to store the updated smart contract therein, and
the output device outputs the smart contract stored in the storage (270).

3. The virtual space provision system (10) according to claim 1, wherein the storage (270) stores as historical information that the character (4) of the user (2) and the accessory associated with the character (4) have been output in another virtual space (3) where another user that is different from the user (2) is capable of moving.

4. A virtual space provision method that provides a virtual space (3) in which a character (4) moves along a course in the virtual space (3) in conjunction with movement of a user (2), the method causes a computer to execute the steps of:
storing movement course information (273) including information on scenery of the course in which the character (4) is capable of moving; and
acquiring biometric information indicating a biological state of the user (2) that exercises, and acquiring exercise amount information indicating an amount of exercise by the user (2),
**characterized by**
computing quality of the exercise of the user (2) indicating an evaluation value of an exercise state of the user on the basis of the biometric and exercise amount information, quality of movement of the character (4) indicating a numerical value reflecting how difficult or easy it is for the character (4) to move in the virtual space (3) based on a condition of the course surface in the virtual space (3) in which the character (4) moves, and movement quality information from the evaluation value and the numerical value;
controlling a situation of the course in which the character (4) moves through by changing a viewpoint in the virtual space (3) on the basis of the movement quality information;
controlling a status of the course on the basis of information of the exercise state of the user (2) and the movement state of the character (4);
changing the viewpoint in the virtual space (3) and a light source setting in a predetermined output device that outputs the course and the character (4) on the basis of the movement quality information
causing shoes (50) that are worn by the user (2) to provide predetermined stimulation to feet of the user (2), the shoes (50) including a device that stimulates tactile, pressure, and temperature sensations in the feet of the user (2); and
controlling the device for controlling a type, size, and time point of stimulation applied to the feet of the user (2) on the basis of the movement quality information and the movement course information (273).

5. A virtual space provision program that provides a virtual space (3) in which a character (4) moves along a course in the virtual space (3) in conjunction with movement of a user (2), the program causes a computer to embody the functions of:
storing movement course information (273) including information on scenery of the course in which the character (4) is capable of moving; and
acquiring biometric information indicating a biological state of the user (2) that exercises, and acquiring exercise amount information indicating an amount of exercise by the user (2),
**characterized by**
computing quality of the exercise of the user (2) indicating an evaluation value of an exercise state of the user on the basis of the biometric and exercise amount information, quality of movement of the character (4) indicating a numerical value reflecting how difficult or easy it is for the character (4) to move in the virtual space (3) based on a condition of the course surface in the virtual space (3) in which the character (4) moves, and movement quality information from the evaluation value and the numerical value;
controlling a situation of the course in which the character (4) moves through by changing a viewpoint in the virtual space (3) on the basis of the movement quality information;
controlling a status of the course on the basis of information of the exercise state of the user (2) and the movement state of the character (4);
changing the viewpoint in the virtual space (3) and a light source setting in a predetermined output device that outputs the course and the character (4) on the basis of the movement quality information; and
causing shoes (50) that are worn by the user (2) to provide predetermined stimulation to feet of the user (2), the shoes (50) including a device that stimulates tactile, pressure, and temperature sensations in the feet of the user (2); and
controlling the device for controlling a type, size, and time point of stimulation applied to the feet of the user (2) on the basis of the movement quality information and the movement course information (273).

## Patentansprüche

1. System (10) zur Bereitstellung eines virtuellen Raums, das einen virtuellen Raum (3) bereitstellt, in dem sich eine Figur (4) entlang eines Kurses im virtuellen Raum (3) in Verbindung mit einer Bewegung eines Benutzers (2) bewegt, wobei das System (10) aufweist:
einen Speicher (270), der Bewegungskursinformationen (273) umfassend Informationen über eine Szenerie des Kurses, auf der sich die Figur (4) bewegen kann, speichert; und
eine Bezugseinheit (212), die biometrische Informationen bezieht, die einen biologischen Zustand des trainierenden Benutzers (2) angeben, und Trainingsausmaßinformationen bezieht, die ein Trainingsausmaß des Benutzers (2) angeben,
**gekennzeichnet durch**
eine Berechnungseinheit (213), die berechnet
eine Trainingsqualität des Benutzers (2), die einen Evaluierungswert eines Trainingszustands des Benutzers auf der Grundlage der biometrischen Informationen und der Trainingsausmaßinformationen angibt,
eine Bewegungsqualität der Figur (4), die einen numerischen Wert angibt, der widerspiegelt, wie schwierig oder leicht es für die Figur (4) ist, sich im virtuellen Raum (3) zu bewegen, basierend auf einem Zustand der Kursoberfläche im virtuellen Raum (3), in dem sich die Figur (4) bewegt, und
Bewegungsqualitätsinformationen aus dem Evaluierungswert und dem numerischen Wert;
eine Kurssteuerung (214), die konfiguriert ist, um zu steuern
eine Situation des Kurses, durch den sich die Figur (4) bewegt, durch Ändern eines Blickwinkels im virtuellen Raum (3) auf der Grundlage der Bewegungsqualitätsinformationen,
einen Status des Kurses auf der Grundlage von Informationen über den Trainingszustand des Benutzers (2) und den Bewegungszustand der Figur (4), und
eine Änderung des Blickwinkels im virtuellen Raum (3) und einer Lichtquelleneinstellung in einer vorbestimmten Ausgabevorrichtung, die den Kurs und die Figur (4) ausgibt, auf der Grundlage der Bewegungsqualitätsinformationen zu ändern; und
Schuhe (50), die vom Benutzer (2) getragen werden und eine vorbestimmte Stimulation an den Füßen des Benutzers (2) bereitstellen, wobei die Schuhe (50) umfassen
eine Vorrichtung, die taktile, Druck- und Temperaturempfindungen in den Füßen des Benutzers (2) stimuliert, und
eine Steuereinheit, die die Vorrichtung steuert, wobei die Steuereinheit konfiguriert ist, um Art, Stärke und Zeitpunkt der auf die Füße des Benutzers (2) ausgeübten Stimulation auf der Grundlage der Bewegungsqualitätsinformationen und der Bewegungskursinformationen (273) zu steuern.

2. System zur Bereitstellung eines virtuellen Raums (10) gemäß Anspruch 1, wobei
die Kaufeinheit (215) eine Aktualisierung eines vom Benutzer (2) abgeschlossenen intelligenten Vertrags ermöglicht und es dem Speicher (270) gestattet, den aktualisierten intelligenten Vertrag darin zu speichern, und
das Ausgabegerät den im Speicher (270) gespeicherten intelligenten Vertrag ausgibt.

3. System zur Bereitstellung eines virtuellen Raums (10) gemäß Anspruch 1, wobei der Speicher (270) als historische Information speichert, dass die Figur (4) des Benutzers (2) und das der Fugur (4) zugeordnete Zubehör in einem anderen virtuellen Raum (3) ausgegeben wurden, in dem sich ein anderer Benutzer, der sich vom Benutzer (2) unterscheidet, bewegen kann.

4. Verfahren zur Bereitstellung eines virtuellen Raums, das einen virtuellen Raum (3) bereitstellt, in dem sich eine Figur (4) entlang eines Kurses im virtuellen Raum (3) in Verbindung mit einer Bewegung eines Benutzers (2) bewegt, wobei das Verfahren einen Computer veranlasst, die Schritte auszuführen:
Speichern von Bewegungskursinformationen (273) umfassend Informationen über die Szenerie des Kurses, auf der sich der Charakter (4) bewegen kann; und
Erfassen biometrischer Informationen, die einen biologischen Zustand des trainierenden Benutzers (2) angeben, und Erfassen von Trainingsausmaßinformationen, die ein Trainingsausmaß des Benutzers (2) angeben,
**gekennzeichnet durch**
Berechnen einer Trainingsqualität des Benutzers (2), die einen Evaluierungswert eines Trainingszustands des Benutzers angibt, auf der Grundlage der biometrischen Informationen und der Trainingsausmaßinformationen, einer Bewegungsqualität der Figur (4), die einen numerischen Wert angibt, der widerspiegelt, wie schwierig oder leicht es für die Figur (4) ist, sich im virtuellen Raum (3) zu bewegen, basierend auf einem Zustand der Kursoberfläche im virtuellen Raum (3), in dem sich die Figur (4) bewegt, sowie von Bewegungsqualitätsinformationen aus dem Evaluierungswert und dem numerischen Wert;
Steuern einer Situation des Kurses, durch den sich die Figur (4) bewegt, durch Ändern eines Blickwinkels im virtuellen Raum (3) auf der Grundlage der Bewegungsqualitätsinformationen;
Steuern eines Zustands des Kurses auf der Grundlage von Informationen über den Trainingszustand des Benutzers (2) und den Bewegungszustand der Figur (4);
Ändern des Blickwinkels im virtuellen Raum (3) und einer Lichtquelleneinstellung in einer vorbestimmten Ausgabevorrichtung, die den Kurs und die Figur (4) ausgibt, auf der Grundlage der Bewegungsqualitätsinformationen;
Veranlassen von Schuhen (50), die vom Benutzer (2) getragen werden, eine vorbestimmte Stimulation an den Füßen des Benutzers (2) zu erzeugen, wobei die Schuhe (50) eine Vorrichtung umfassen, die Tast-, Druck- und Temperaturempfindungen in den Füßen des Benutzers (2) stimuliert; und
Steuern der Vorrichtung zur Steuerung von Art, Stärke und Zeitpunkt der auf die Füße des Benutzers (2) ausgeübten Stimulation auf der Grundlage der Bewegungsqualitätsinformationen und der Bewegungskursinformationen (273).

5. Programm zur Bereitstellung eines virtuellen Raums, das einen virtuellen Raum (3) bereitstellt, in dem sich eine Figur (4) entlang eines Kurses im virtuellen Raum (3) in Verbindung mit der Bewegung eines Benutzers (2) bewegt, wobei das Programm einen Computer veranlasst, die folgenden Funktionen auszuführen:
Speichern von Bewegungskursinformationen (273) umfassend Informationen über die Szenerie des Kurses, auf der sich der Charakter (4) bewegen kann; und
Erfassen biometrischer Informationen, die einen biologischen Zustand des trainierenden Benutzers (2) angeben, und Erfassen von Trainingsausmaßinformationen, die ein Trainingsausmaß des Benutzers (2) angeben,
**gekennzeichnet durch**
Berechnen einer Trainingsqualität des Benutzers (2), die einen Evaluierungswert eines Trainingszustands des Benutzers angibt, auf der Grundlage der biometrischen Informationen und der Trainingsausmaßinformationen, einer Bewegungsqualität der Figur (4), die einen numerischen Wert angibt, der widerspiegelt, wie schwierig oder leicht es für die Figur (4) ist, sich im virtuellen Raum (3) zu bewegen, basierend auf einem Zustand der Kursoberfläche im virtuellen Raum (3), in dem sich die Figur (4) bewegt, sowie von Bewegungsqualitätsinformationen aus dem Evaluierungswert und dem numerischen Wert;
Steuern einer Situation des Kurses, durch den sich die Figur (4) bewegt, durch Ändern eines Blickwinkels im virtuellen Raum (3) auf der Grundlage der Bewegungsqualitätsinformationen;
Steuern eines Zustands des Kurses auf der Grundlage von Informationen über den Trainingszustand des Benutzers (2) und den Bewegungszustand der Figur (4);
Ändern des Blickwinkels im virtuellen Raum (3) und einer Lichtquelleneinstellung in einer vorbestimmten Ausgabevorrichtung, die den Kurs und die Figur (4) ausgibt, auf der Grundlage der Bewegungsqualitätsinformationen;
Veranlassen von Schuhen (50), die vom Benutzer (2) getragen werden, eine vorbestimmte Stimulation an den Füßen des Benutzers (2) zu erzeugen, wobei die Schuhe (50) eine Vorrichtung umfassen, die Tast-, Druck- und Temperaturempfindungen in den Füßen des Benutzers (2) stimuliert; und
Steuern der Vorrichtung zur Steuerung von Art, Stärke und Zeitpunkt der auf die Füße des Benutzers (2) ausgeübten Stimulation auf der Grundlage der Bewegungsqualitätsinformationen und der Bewegungskursinformationen (273).

## Revendications

1. Système de mise à disposition d'un espace virtuel (10) qui fournit un espace virtuel (3) dans lequel un personnage (4) se déplace le long d'un parcours dans l'espace virtuel (3) en liaison avec un déplacement d'un utilisateur (2), le système (10) comprenant :
une mémoire (270) qui stocke des informations de parcours de déplacement (273) comportant des informations sur un décor du parcours dans lequel le personnage (4) est capable de se déplacer ; et
une unité d'acquisition (212) qui acquiert des informations biométriques indiquant un état biologique de l'utilisateur (2) qui s'entraîne et acquiert des informations de quantité d'entraînement indiquant une quantité d'entraînement de l'utilisateur (2),
**caractérisé par**
une unité de calcul (213) qui calcule
la qualité de l'entraînement de l'utilisateur (2), en indiquant une valeur d'évaluation d'un état d'entraînement de l'utilisateur sur la base des informations biométriques et des informations de quantité d'entraînement,
une qualité de déplacement du personnage (4), en indiquant une valeur numérique reflétant dans quelle mesure il est difficile ou facile pour le personnage (4) de se déplacer dans l'espace virtuel (3) sur la base d'une condition de la surface de parcours dans l'espace virtuel (3) dans lequel se déplace le personnage (4), et
des informations de qualité de déplacement à partir de la valeur d'évaluation et de la valeur numérique ;
un dispositif de commande de parcours (214) qui est configuré pour commander
une situation du parcours dans laquelle le personnage (4) se déplace en changeant un point de vue dans l'espace virtuel (3) sur la base des informations de qualité de déplacement,
un statut du parcours sur la base d'informations de l'état d'entraînement de l'utilisateur (2) et de l'état de déplacement du personnage (4), et
changer le point de vue dans l'espace virtuel (3) et un réglage de source de lumière dans un dispositif de sortie prédéterminé qui sort le parcours et le personnage (4) sur la base des informations de qualité de déplacement ; et
des chaussures (50) qui sont portées par l'utilisateur (2) et qui fournissent une stimulation prédéterminée aux pieds de l'utilisateur (2), les chaussures (50) comportant
un dispositif qui stimule des sensations tactiles, de pression et de température dans les pieds de l'utilisateur (2), et
un dispositif de commande qui commande le dispositif, le dispositif de commande étant configuré pour commander un type, une taille et un moment de stimulation appliquée aux pieds de l'utilisateur (2) sur la base des informations de qualité de déplacement et des informations de parcours de déplacement (273).

2. Système de mise à disposition d'un espace virtuel (10) selon la revendication 1, dans lequel
l'unité d'achat (215) permet une mise à jour d'un contrat intelligent que l'utilisateur (2) conclut et permet au mémoire (270) d'y stocker le contrat intelligent mis à jour, et
le dispositif de sortie sort le contrat intelligent stocké dans la mémoire (270).

3. Système de mise à disposition d'un espace virtuel (10) selon la revendication 1, dans lequel la mémoire (270) stocke, en tant qu'information historique, le fait que le personnage (4) de l'utilisateur (2) et l'accessoire associé au personnage (4) ont été sortis dans un autre espace virtuel (3) où un autre utilisateur qui est différent de l'utilisateur (2) est capable de se déplacer.

4. Procédé de mise à disposition d'un espace virtuel qui fournit un espace virtuel (3) dans lequel un personnage (4) se déplace le long d'un parcours dans l'espace virtuel (3) en liaison avec un déplacement d'un utilisateur (2) ; le procédé amène un ordinateur à exécuter les étapes de :
stocker des informations de parcours de déplacement (273) comportant des informations sur un décor du parcours dans lequel le personnage (4) est capable de se déplacer ; et
acquérir des informations biométriques indiquant un état biologique de l'utilisateur (2) qui s'entraîne, et acquérir des informations de quantité d'entraînement indiquant une quantité d'entraînement de l'utilisateur (2),
**caractérisé par**
calculer une qualité de l'entraînement de l'utilisateur (2), en indiquant une valeur d'évaluation d'un état d'entraînement de l'utilisateur sur la base des informations biométriques et des informations de quantité d'entraînement, une qualité de déplacement du personnage (4) en indiquant une valeur numérique reflétant dans quelle mesure il est difficile ou facile pour le personnage (4) de se déplacer dans l'espace virtuel (3) sur la base d'une condition de la surface de parcours dans l'espace virtuel (3) dans lequel se déplace le personnage (4), et des informations de qualité de déplacement à partir de la valeur d'évaluation et de la valeur numérique ;
commander une situation du parcours dans lequel le personnage (4) se déplace en changeant un point de vue dans l'espace virtuel (3) sur la base des informations de qualité de déplacement ;
commander un statut du parcours sur la base d'informations de l'état d'entraînement de l'utilisateur (2) et de l'état de déplacement du personnage (4) ;
changer le point de vue dans l'espace virtuel (3) et un réglage de source de lumière dans un dispositif de sortie prédéterminé qui sort le parcours et le personnage (4) sur la base des informations de qualité de déplacement
amener des chaussures (50) qui sont portées par l'utilisateur (2) à fournir une stimulation prédéterminée aux pieds de l'utilisateur (2), les chaussures (50) comportant un dispositif qui stimule les sensations tactiles, de pression et de température dans les pieds de l'utilisateur (2) ; et
commander le dispositif pour commander un type, une taille et un moment de stimulation appliquée aux pieds de l'utilisateur (2) sur la base des informations de qualité de déplacement et des informations de parcours de déplacement (273).

5. Programme de mise à disposition d'un espace virtuel qui fournit un espace virtuel (3) dans lequel un personnage (4) se déplace le long d'un parcours dans l'espace virtuel (3) en liaison avec un déplacement d'un utilisateur (2) ; le programme amène un ordinateur à mettre en œuvre les fonctions de :
stocker des informations de parcours de déplacement (273) comportant des informations sur un décor du parcours dans lequel le personnage (4) est capable de se déplacer ; et
acquérir des informations biométriques indiquant un état biologique de l'utilisateur (2) qui s'entraîne, et acquérir des informations de quantité d'entraînement indiquant une quantité d'entraînement de l'utilisateur (2),
**caractérisé par**
calculer une qualité de l'entraînement de l'utilisateur (2) en indiquant une valeur d'évaluation d'un état d'entraînement de l'utilisateur sur la base des informations biométriques et des informations de quantité d'entraînement, une qualité de déplacement du personnage (4) en indiquant une valeur numérique reflétant dans quelle mesure il est difficile ou facile pour le personnage (4) de se déplacer dans l'espace virtuel (3) sur la base d'un état de la surface de parcours dans l'espace virtuel (3) dans lequel se déplace le personnage (4), et des informations de qualité de déplacement à partir de la valeur d'évaluation et de la valeur numérique ;
commander une situation du parcours dans lequel le personnage (4) se déplace en changeant un point de vue dans l'espace virtuel (3) sur la base des informations de qualité de déplacement ;
commander un statut du parcours sur la base d'informations de l'état d'entraînement de l'utilisateur (2) et de l'état de déplacement du personnage (4) ;
changer le point de vue dans l'espace virtuel (3) et un réglage d'une source lumineuse dans un dispositif de sortie prédéterminé qui sort le parcours et le personnage (4) sur la base des informations de qualité de déplacement ; et
amener des chaussures (50) qui sont portées par l'utilisateur (2) à fournir une stimulation prédéterminée aux pieds de l'utilisateur (2), les chaussures (50) comportant un dispositif qui stimule les sensations tactiles, de pression et de température dans les pieds de l'utilisateur (2) ; et
commander le dispositif pour commander un type, une taille et un moment de stimulation appliquée aux pieds de l'utilisateur (2) sur la base des informations de qualité de déplacement et des informations de parcours de déplacement (273).
